# EUROPÄISCHE PATENTANMELDUNG

(11) **EP 1 912 128 A2**
(43) Veröffentlichungstag der Anmeldung: **16.04.2008**
(21) Anmeldenummer: 07118169.7
(22) Anmeldetag: 10.10.2007
(51) Int. Cl.: G06F 17/30, H04M 1/725

(54) **Verfahren und System zum Zugriff von einem Mobiltelefon über einen externen Computer auf das Internet**

(30) Priorität: 11.10.2006 DE 102006048453
(71) Anmelder: Vodafone Holding GmbH, 40213 Düsseldorf (DE)
(72) Erfinder: Vahldiek, Frank, 40237, Düsseldorf (DE)
(74) Vertreter: Vogel, Andreas

(57) **Zusammenfassung**

Die Erfindung betrifft ein Verfahren zur Kommunikation mit dem Internet (10), mit einer Datenverarbeitungseinheit (20), die über ein Datenübertragungselement (21) und eine erste Schnittstelle (25a, 25b, 25c) verfügt, wobei das Datenübertragungselement (21) einen Datenaustausch (11) zwischen dem Internet (10) und der Datenverarbeitungseinheit (20) ermöglicht, mit einem separaten Handcomputer (30), insbesondere einem Mobiltelefon, der eine Kommunikationseinheit (31) und eine zweite Schnittstelle (35a, 35b, 35c) aufweist, sowie einer, in dem Handcomputer (30) integrierten Software (60,60'), wobei die Kommunikationseinheit (31) einen Austausch von Informationen mit einem Mobilfunknetz ermöglicht, und nach Kommunikation (40) der ersten (25a, 25b, 25c) und der zweiten Schnittstelle (35a, 35b, 35c) die Software (60,60') eine Verbindung des Handcomputers (30) mit dem Internet (10) über das Datenübertragungselement (21) der Datenverarbeitungseinheit (20) ermöglicht.

## Beschreibung

Die Erfindung betrifft ein Verfahren sowie ein System zur Kommunikation mit dem Internet mit einem Handcomputer, insbesondere mit einem Mobilfunkgerät.

Es ist bekannt, mittels eines Mobilfunkgerätes unter Verwendung eines Kommunikationsnetzes, insbesondere eines Mobilfunknetz, eine Verbindung zum Internet herzustellen. Die Verbindung über herkömmliche Mobilfunknetze lässt jedoch nur eine relativ geringe Datenrate zu, so dass die Dauer und Kosten für eine Datenübertragung oft sehr hoch sind.

Zur Steigerung der Datenrate wurden Mobilfunknetze entwickelt, die nach dem GSM- oder UMTS-Standard (GSM = Global System for Mobile Communication; UMTS = Universal Mobile Telecommunication System) arbeiten.

Für die Datenübertragung via Mobilfunknetz sind verschiedene zusätzliche Standards definiert worden. Beispielsweise ermöglichen HSCSD (= High Speed Circuit Switch Data) oder GPRS (= General Packard Radio Service) eine Datenübertragung mit ausreichender Bandbreite über ein GSM-Mobilfunknetz. Hierbei benutzt der HSCSD-Standard mehrere Funkkanäle gleichzeitig, d.h. dem Nutzer werden bei der Datenübertragung vorübergehend gleich mehrere Frequenzen zugewiesen. So ermöglicht HSCSD zwar hohe Übertragungsraten, die sich auch schon für das Surfen im Internet eignen, doch verbraucht das Verfahren eine große Menge an Leitungskapazität.

Beim GPRS oder Allgemeiner Paket-Datenfunk werden die Daten nicht leitungsvermittelt, sondern paketweise übertragen, allerdings konkurrierend zur Sprachübermittlung. Die weiteste Fortentwicklung und die effizienteste Nutzung der GSM- und auch der amerikanischen TDMA-Netze werden heute mittels EDGE (Enhanced Datarates for Global Evolution) erreicht.

Des Weiteren ist es bekannt, eine Datenverarbeitungseinheit, wie einen Computer über ein Festnetz mit dem Internet zu verbinden. Hierbei werden zur Zeit sehr hohe Übertragungsraten durch Einsatz der DSL-Datenübertragungstechnologie (Digital Subscriber Line) erreicht.

Aufgabe der Erfindung ist es, ein Verfahren sowie ein System zur Kommunikation mit dem Internet zu schaffen, bei dem ein Handcomputer, insbesondere ein Mobilfunkgerät hohe Übertragungsraten während des Surfens mit dem Internet erreicht.

Die Aufgabe wird erfindungsgemäß durch ein Verfahren zur Kommunikation mit dem Internet mit den Merkmalen gemäß dem unabhängigen Patentanspruch 1 gelöst. In den abhängigen Ansprüchen sind bevorzugte Weiterentwicklungen der Erfindung aufgeführt. Die der Erfindung zugrunde liegende Aufgabe wird ebenfalls durch ein System zur Kommunikation mit dem Internet gelöst, welches nach einem der beschriebenen Verfahren betreibbar ist. Des Weiteren wird die Aufgabe durch ein Computerprogrammprodukt - im Folgenden auch Software - zur Ausführung des erfindungsgemäßen Verfahrens gelöst. Merkmale und Details, die im Zusammenhang mit dem erfindungsgemäßen Verfahren beschrieben sind, gelten dabei selbstverständlich auch im Zusammenhang mit dem erfindungsgemäßem System sowie der erfindungsgemäßen Software und jeweils umgekehrt.

Erfindungsgemäß wird die Aufgabe durch ein Verfahren zur Kommunikation mit dem Internet gelöst, mit einer Datenverarbeitungseinheit, die über ein Datenübertragungselement und eine erste Schnittstelle verfügt. Dabei ermöglicht das Datenübertragungselement einen Datenaustausch zwischen dem Internet und der Datenverarbeitungseinheit. Das erfindungsgemäße Verfahren weist einen separaten Handcomputer, insbesondere ein Mobiltelefon auf. Der Handcomputer weist eine Kommunikationseinheit und eine zweite Schnittstelle auf, sowie eine, in dem Handcomputer integrierte Software. Dabei ermöglicht die Kommunikationseinheit einen Austausch von Informationen mit dem Mobilfunknetz und nach Kommunikation der ersten und der zweiten Schnittstelle ermöglicht die Software eine Verbindung des Handcomputers mit dem Internet über das Datenübertragungselement der Datenverarbeitungseinheit.

Der Kern des erfindungsgemäßen Verfahrens liegt darin, die Kommunikationsressourcen der Datenverarbeitungseinheit für den Handcomputer nutzbar zu machen. Durch das erfindungsgemäße Verfahren kann der Handcomputer mit sehr hohen Datenraten auf das Internet zugreifen, ohne dass es zusätzlichen Hardwarekomponenten bedarf. Der Handcomputer kommuniziert primär mit der Datenverarbeitungseinheit, welche wiederum mit dem Internet verbunden ist. Das erfindungsgemäße Verfahren überträgt die von der Datenverarbeitungseinheit geladenen Daten und Information an den Handcomputer. Für einen Benutzer des erfindungsgemäßen Verfahrens ergibt sich somit der Vorteil, dass sein Handcomputer mit einer Datenrate auf das Internet zugreift kann, die bisher einer Datenverarbeitungseinheit vorbehalten ist.

Der Begriff Handcomputer soll im Folgenden eine Einheit bezeichnen, die Signale, insbesondere Daten- oder Informationen, verarbeiten und in wenigstens eine Richtung übermitteln kann. Es kann sich dabei insbesondere um ein Mobiltelefon, also ein tragbares, batteriebetriebenes Funktelefon handeln. Kommunikation ist im Sinne der Erfindung insbesondere eine Daten- oder Informationsübertragung. Diese kann auf eine Richtung beschränkt sein oder zwischen zwei Komponenten bidirektional erfolgen.

Der Begriff Datenverarbeitungseinheit im Sinne des erfindungsgemäßen Verfahrens beschreibt ein Gerät, dass Informationen mit Hilfe einer programmierbaren Rechenvorschrift bearbeitet, wie etwa Computer, Laptops oder PDAs. Die Verbindung zwischen der Datenverarbeitungseinheit und dem Handcomputer wird erfindungsgemäß durch eine erste und eine zweite Schnittstelle erreicht. Als Schnittstelle wird hierbei ein Übergang bezeichnet, der den Austausch von Signalen, insbesondere Daten oder Informationen zwischen mindestens zwei Komponenten in wenigstens eine Richtung ermöglicht. Die Schnittstellen können dabei über eine Leitung und/oder schnurlos z.B. mittels elektromagnetischer Wellen verbunden sein. Nicht kabelgebundene Systeme sind insbesondere Infrarot, Funk, Bluetooth oder Wireless LAN.

Das Datenübertragungselement ist ein Bestandteil der Datenverarbeitungseinheit und ermöglicht dessen Kommunikation mit dem Internet. Das Datenübertragungselement kann als Modem ausgestaltet sein, welches digitale Daten durch Modulation eines analogen Signals über analoge Kommunikationsnetze, wie zum Beispiel Telefon- oder Funknetze überträgt. An dem, dem Modem entgegengesetzten Endpunkt der Kommunikation werden die digitalen Daten durch Demodulation aus den analogen Signalen zurück gewonnen.

Moderne Schnittstellen - wie etwa USB - weisen eine Anzahl von unterschiedlichen Geräteklassen auf, für die jeweils eine individuelle Schnittstellenkennung und ein generischer Treiber definiert sind. Beide sind in den Betriebssystemen moderner Datenverarbeitungseinheiten hinterlegt. Auf diese Weise sind Geräte, die mittels der Schnittstelle ein erstes Mal an die Datenverarbeitungseinheiten angeschlossen werden zumindest in den grundlegenden Funktionen nutzbar, ohne das erst ein spezieller Treiber installiert werden muss. Aus dieser Funktionalität ergibt sich eine mögliche vorteilhafte Ausgestaltung des erfindungsgemäßen Verfahrens, welches sich dadurch auszeichnet, dass im Moment einer Kommunikation zwischen Handcomputer und Datenverarbeitungseinheit
(1) der Handcomputer eine Schnittstellenkennung eines Wechseldatenträgers an die Datenverarbeitungseinheit übermittelt,
(2) die Software vom Handcomputer auf der Datenverarbeitungseinheit installiert wird,
(3) der Handcomputer eine Schnittstellenkennung eines Modems an die Datenverarbeitungseinheit übermittelt, und
(4) dass die Verbindung zwischen dem Handcomputer und dem Internet mittels der auf der Datenverarbeitungseinheit installierten Software hergestellt wird.

Durch die Übermittlung der Schnittstellenkennung eines Wechseldatenträgers ist sichergestellt, dass zumindest eine grundlegende Kommunikation zwischen der Datenverarbeitungseinheit und dem Handcomputer möglich ist. Auch wenn die so erzielte Verbindungsqualität nicht optimal ist, kann dennoch die Software auf das Datenverarbeitungsgerät übertragen und dort installiert werden. Des Weiteren sind Wechseldatenträger heutzutage ein derart weit verbreitertes Speichermedium, dass es kaum noch Schnittstellen gibt, die diese nicht problemlos erkennen können. Durch den, mit (1) bezeichneten Schritt ist sichergestellt, dass die grundlegenden Vorraussetzungen für eine Kommunikation des Mobilfunkgerätes mit dem Internet über die Datenverarbeitungseinheit erfüllt sind, ohne dass es einer vorherigen Installation einer speziellen Treibersoftware bedarf. Da es Zielsetzung des erfindungsgemäßen Verfahrens ist, eine hohe Datenrate bei der Übertragung von Informationen aus dem Internet auf den Handcomputer zu erzielen, wandelt letzterer anschließend seine Schnittstellenkennung in jene eines Modems um. Dadurch, sowie durch die in Schritt (2) installierte Software können das Datenübertragungselement und die Schnittstellen derart konfiguriert werden, dass ein optimaler Datentransfer zwischen dem Handcomputer und dem Internet sichergestellt ist.

Da erfindungsgemäß die Software für das Verfahren abrufbereit auf dem Handcomputer liegt und sich bei Bedarf auf der Datenverarbeitungseinheit installiert, ist es jederzeit und an jedem Ort möglich das erfindungsgemäße Verfahren an einer beliebigen Datenverarbeitungseinheit auszuüben, die über eine mit dem Handcomputer kompatible Schnittstelle verfügt. Falls durch die Übermittlung der Schnittstellenkennung zwischen den Schnittstellen eine - wenn auch rudimentäre - Datenübertragung möglich ist, kann die erfindungsgemäße Software übermittelt und für die Installation der notwendigen Treiber genutzt werden. So ist dem Handcomputer der Zugriff auf das Internet auch über Datenverarbeitungseinheiten möglich, die diesem normalerweise nicht zugängig wären, wie etwa auf Reisen oder Konferenzen. Des Weiteren ermöglicht das Verfahren einen Zugang zum Internet über so genannte Hot-Spots, die mittlerweile häufig in Cafes, Hotels, Bahnhöfen, Flughäfen oder sonstigen öffentlichen Plätzen anzutreffen sind und im Allgemeinen kostenlos zur Verfügung stehen.

In einer weiteren vorteilhaften Ausführungsvariante kann die, in Schritt (2) beschriebene Installation erst nach einer Bestätigung auf der Datenverarbeitungseinheit ausgeführt werden, was eine ungewollte Verbindung zum Internet verhindert. Vielmehr muss der Inhaber der Datenverarbeitungseinheit durch die Bestätigung in die Installation der Software einwilligen. Optional ist es auch möglich, dass der Schritt (4) erst nach einer Bestätigung auf dem Handcomputer und/oder auf der Datenverarbeitungseinheit ausgeführt wird. Dieses verhindert den ungewollten Aufbau einer Verbindung zum Internet. Da es häufig nur kurzzeitigen Zugängen zum Internet bedarf, würde eine kontinuierliche und/oder automatisch ausgelöste Verbindung nur die Hardware- und/oder Software-Ressourcen des Internets belasten.

Eine weitere vorteilhafte Ausführungsvariante des erfindungsgemäßen Verfahrens ist dadurch ausgezeichnet, dass vor Schritt (2)
(1 a) der Handcomputer prüft, ob die Software auf der Datenverarbeitungseinheit installiert ist,
(1 b) falls die Software nicht installiert ist, das Verfahren mit Schritt (2) fortgeführt wird, und
(1 c) falls die Software installiert ist, das Verfahren mit Schritt (3) fortgeführt wird.

Da nach einer ersten Installation die erfindungsgemäße Software individualisierbar sein kann, könnten diese benutzerbezogenen Informationen bei einer erneuten Installation verloren gehen. Um diesen Datenverlust zu verhindern, bedarf es der beschriebenen Kontrolle, ob die Software schon auf der Datenverarbeitungseinheit installiert ist.

Einer der zentralen Vorteile des erfindungsgemäßen Verfahrens liegt darin, dass der Benutzer des Handcomputers nicht auch Besitzer der Datenverarbeitungseinheit sein muss. Vielmehr kann die Datenverarbeitungseinheit beispielhafte von einem Arbeitgeber oder einem Gastgeber bereitgestellt werden. Aus Gründen der Datensicherheit sollte während der Kommunikation zwischen dem Handcomputer und der Datenverarbeitungseinheit keines der Geräte Zugriff auf möglicherweise sensible Daten des jeweils anderen Gerätes erlangen können. Um dieses sicherzustellen, kann einerseits der Handcomputer eine Steuereinheit aufweisen, die der Datenverarbeitungseinheit lediglich einen Zugang auf Ressourcen ermöglicht, die für die Kommunikation mit dem Internet notwendig sind. Da auf modernen Handcomputern häufig personalisierte Informationen gespeichert sind, verhindert die Steuereinheit, dass unbefugte Personen mittels der Datenverarbeitungseinheit auf diese Daten zugreifen können und dem Besitzer des Handcomputers möglicherweise ein beträchtlicher Schaden entsteht. Andererseits kann die Datenverarbeitungseinheit dem Handcomputer lediglich die notwendigen Mittel zur Kommunikation mit dem Internet zur Verfügung stellen, was einen ungewollten Zugriff auf die weiteren Elemente der Datenverarbeitungseinheit, wie etwa das Netzwerk, Festplatten, Drucker, Scanner und/oder CD-Brenner verhindert.

In einer weiteren vorteilhaften Ausführungsvariante weist der Handcomputer eine Speichereinheit auf, in der mindestens ein Zugangsdatensatz gespeichert ist. Dieser Zugangsdatensatz kann während der Kommunikation mit dem Internet, insbesondere verschlüsselt übermittelt werden. Bei dem Zugangsdatensatz kann es sich in einer ersten Variante um Informationen handeln, die eine Authentifizierung des Benutzers und/oder des Handcomputers gegenüber dem Internet ermöglichen. So kann der Zugangsdatensatz eine eindeutige gerätespezifische, elektronische Identifizierungsnummer des Handcomputers beinhalten, welche aus einem Typencode und einer fortlaufenden, herstellerabhängigen Fertigungsnummer (IMEI) besteht. Des Weiteren kann eine internationale Mobilfunkteilnehmerkennung (IMSI) übersandt werden. Diese Angaben ermögliche eine eindeutige Authentifizierung des Benutzers und/oder des Handcomputers, was insbesondere dann von Bedeutung ist, wenn der Zugang zum Internet kostenpflichtig ist und entsprechend abgerechnet werden soll.

In einer zweiten Variante kann es sich bei dem Zugangsdatensatz auch um Informationen handeln, die auf bestimmten Internetseiten benötigt werden. So kann der Zugangsdatensatz Passwörter und Username für E-Mail Anbieter, Banken oder Serviceanbieter wie etwa Buchclubs beinhalten. Darüber hinaus kann dem Zugangsdatensatz eine URL-Adresse (Uniform Resource Locator) zugeordnet sein und bei jedem Aufruf der URL-Adresse der Zugangsdatensatz aus der Speichereinheit gelesen werden. Insbesondere kann bei der Einwahl in das Internet eine Start-URL-Adresse fest vorgegeben sein, die einer Webseite zugeordnet ist, auf der eine Identifizierung des Benutzers manuell oder automatisch erfolgt. So kann der Handcomputer beispielsweise automatisch auf die firmeneigene Homepage des Mobilfunknetzanbieters geleitet werden. Optional kann in dem Handcomputer durch Wechsel des Zugangsdatensatzes auch die Start-URL-Adresse verändert werden, so dass der Benutzer jeweils auf die von Ihm gewünscht Seite geführt wird.

In einer weiteren vorteilhaften Ausgestaltung weist der Handcomputer eine Eingabe- und/oder Ausgabeeinheit auf. Durch eine Betätigung der Eingabeeinheit kann der Aufbau einer Kommunikation mit dem Internet über die Schnittstellen gestartet und optimal ein Verfahrensstand auf der Ausgabeeinheit angezeigt werden. Darüber hinaus kann der Handcomputer eine Verbindungstaste aufweisen, durch deren Betätigung über die Schnittstelle des Handcomputers automatisch ein Verbindungssignal gesandt wird, welches prüft, ob eine nutzbare Datenverarbeitungseinheit in der Nähe bereit steht. Sollte dieses Verbindungssignal von einer Datenverarbeitungseinheit eine positive Antwort erhalten, kann mittels des erfindungsgemäßen Verfahrens die Verbindung zum Internet hergestellt werden.

In einer weiteren vorteilhaften Variante kann der Handcomputer über die Datenverarbeitungseinheit in ein LAN (Local Area Net) eingebunden sein, wodurch ein Zugriff auf zumindest einzelne Ressourcen des LAN möglich ist. So ist es denkbar, dass der Handcomputer mittels des LAN Daten und Informationen aus dem Internet auf den Hardwareressourcen ausdrucken, speichern oder in sonstiger Art bearbeiten kann. Des Weiteren kann der Handcomputer mit weiteren Datenverarbeitungseinheiten des LAN kommunizieren, wodurch der Handcomputer ein aktives Element im LAN wird und nicht nur auf die Kommunikation mit dem Internet beschränkt ist. Insbesondere kann durch das Einbinden des Handcomputers in das LAN die Verbindung zum Internet nicht nur über jene Datenverarbeitungseinheit geschehen, über deren Schnittstelle eine Verbindung mit dem Handcomputer besteht. Vielmehr kann eine zweite im LAN integrierte Datenverarbeitungseinheit das Datenübertragungselement aufweisen, welches die Kommunikation des Handcomputers mit dem Internet ermöglicht. So gesehen würde die Kommunikation nicht über eine sondern über zwei Stationen erfolgen.

Weitere Maßnahmen, Merkmale, Aspekte und Effekte der Erfindung ergeben sich aus den Unteransprüchen, der nachfolgenden Beschreibung sowie den Zeichnungen. In den Zeichnungen ist die Erfindung in einem Ausführungsbeispiel schematisch dargestellt. Es zeigen:
- Fig.1: einen Handcomputer sowie eine Datenverarbeitungseinheit, und
- Fig.2: ein Flussdiagramm des erfindungsgemäßen Verfahrens.

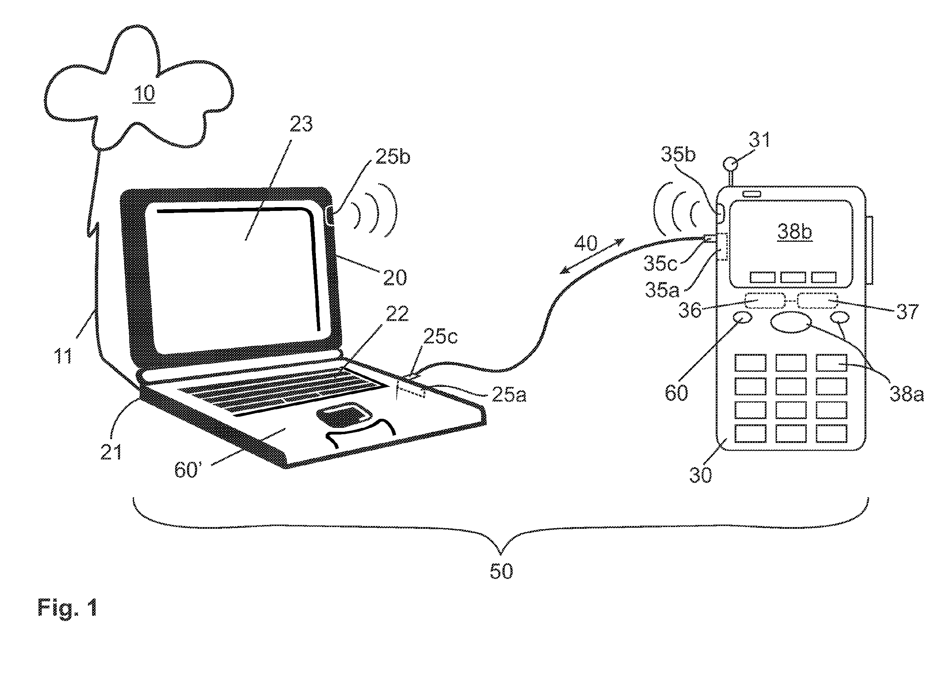

In Figur 1 ist ein Handcomputer 30 dargestellt, der eine Eingabeeinheit 38a aufweist, über die ein Benutzer Informationen eingeben kann. Diese Informationen werden auf einer Ausgabeeinheit 38b angezeigt. Bei der Ausgabeeinheit 38b kann es sich um einen Flachbildschirm handeln, der nach der Flüssigkristall bzw. Plasmatechnik arbeitet. Damit der Handcomputer 30 mit einem - nicht dargestellten - Mobilfunknetz kommunizieren kann, weist der Handcomputer 30 eine Kommunikationseinheit 31 auf. Bei der Kommunikationseinheit 31 handelt es sich um eine in konstruktiver Baueinheit ausgeführte Kombination aus Sender und Empfänger. Mittels der Kommunikationseinheit 31 können elektromagnetische Wellen gesendet und empfangen werden, um eine Kommunikationsverbindung zum Mobilfunknetz aufzubauen. Über diese Kommunikationsverbindung ist ein einseitiger oder wechselseitiger Austausch von Sprache, Text, Grafiken oder Daten möglich.

Weiterhin ist in Figur 1 eine Datenverarbeitungseinheit 20 dargestellt. In dem hier gezeigten Ausführungsbeispiel handelt es sich bei der Datenverarbeitungseinheit 20 um einen Laptop, was selbstverständlich nur als erläuterndes Beispiel verstanden werden soll und in keiner Weise eine Beschränkung der vorliegenden Erfindung darstellt. Die Datenverarbeitungseinheit 20 sowie der Handcomputer 30 bilden ein System 50, mit dessen Hilfe eine Kommunikation mit dem Internet 10 möglich ist.

Die Datenverarbeitungseinheit 20 weist eine Tastatur 22 auf, über die ein Benutzer Daten und Informationen eingeben kann. Die so eingegebenen Werte können mittels eines Displays 23 angezeigt werden. Des Weiteren weist die Datenverarbeitungseinheit 20 ein Datenübertragungselement 21 auf, das Informationen von und/oder an ein Internet 10 überträgt. Das Internet 10 (Interconnected Networks) ist eine elektronische Verbindung von Rechnern, die in der jetzigen Form rund um die Uhr Verbindungen herstellen, Nachrichten übermitteln und gespeicherte Inhalte abrufbar halten. Umgangssprachlich wird das Internet 10 häufig synonym zum World Wide Web verwendet, das jedoch nur eine von vielen Anwendungen des Internets 10 ist. Im Rahmen der Erfindung soll das Internet 10 sowohl die beschriebenen Rechnerstrukturen als auch die auf jenen laufenden Dienste umfassen. Damit ist neben dem World Wide Web insbesondere auch E-Mail, Telnet (Teletype Network), SSH (Secure shell), P2P (Peer-to-Peer Connection) und VPN (Virtual Private Network) umfasst. In dem dargestellten Ausführungsbeispiel handelt es sich bei dem Datenübertragungselement 21 um ein Modem, welches insbesondere über eine DSL-Verbindung einen Datenaustausch 11 mit dem Internet 10 erzielt. Mit bekannten DSL-Modems sind zu Zeit Datenübertragungsraten von über 10.000 kbit/s erreichbar, was einen schnellen Zugriff auch auf umfangreiche Dateien ermöglicht.

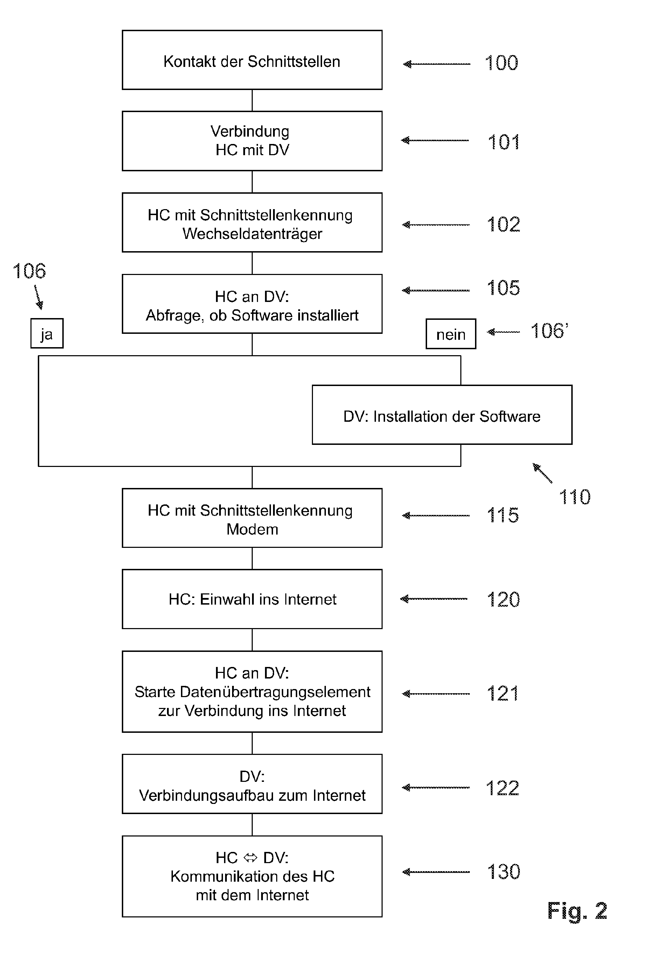

Die mit bekannten Kommunikationseinheiten 31 erzielbaren Übertragungsraten sind deutlich geringer. So erreichen bekannte GSM Mobiltelefone Übertragungsraten in der Größenordnung von einigen 10 kbit/s, was für ein komfortables Surfen im Internet nicht ausreichend ist. Eine Abhilfe schafft das erfindungsgemäße Verfahren zur Kommunikation mit dem Internet. Die einzelnen Schritte des Verfahrens bzw. der Software sind in Fig. 2 als Flussdiagramm dargestellt. In einem ersten Schritt 100 wird eine Kommunikationsverbindung 40 zwischen einer ersten Schnittstelle 25a,b,c der Datenverarbeitungseinheit 20 (DV) und einer zweiten Schnittstelle 35a,b,c des Handcomputers 30 (HC) aufgebaut. Zur Verdeutlichung sind in Fig. 1 drei verschiedene Schnittstellenpaare dargestellt: ein optisches 25a,35a, ein funkbasiertes 25b,35b sowie ein leitungsgebundenes Schnittstellenpaar 25c,35c. Die meisten heute gebräuchlichen Handcomputer 30 und Datenverarbeitungseinheiten 20 weisen optische Schnittstellen 25a, 35a auf, über die insbesondere mittels Infrarotlicht eine Kommunikationsverbindung 40 aufgebaut wird. Auf Grund der sehr hohen erreichbaren Bandbreiten dominieren aber leitungsgebundene Verbindungen.

Im Allgemeinen muss die Datenverarbeitungseinheit 20 mit einem individuellen Gerätetreiber versehen werden, um mit einem unbekannten Handcomputer 30 über eine der Schnittstellen 25a,b,c bzw. 35,a,b,c kommunizieren zu können. Im gezeigten Ausführungsbeispiel weisen die Schnittstellen aber einen generischen Treiber auf. Dadurch kann nach einem ersten Kontakt 100 zwischen dem Handcomputer 30 und der Datenverarbeitungseinheit 20 eine Verbindung 101 aufgebaut und anschließend die Software 60 auf die Datenverarbeitungseinheit 20 übermittelt werden. Um diese Übermittelung zu ermöglichen, kann der Handcomputer 30 die Schnittstellenkennung eines Wechseldatenträgers 102 übersenden.

Wie Fig. 2 verdeutlicht, kann vor der Installation der Software 60 noch eine Abfrage 105 von Seiten des Handcomputers 30 gestartet werden, ob die Software 60 schon bei einer vorherigen Kommunikation 40 installiert wurde. Bejaht 106 die Datenverarbeitungseinheit 20 diese Anfrage 105, so bedarf es keiner nochmaligen Installation. Wird die Anfrage negativ beantwortet 106', so erfolgt die Installation 110 der Software 60. Zur Installation 110 der Software 60 auf der Datenverarbeitungseinheit 20 kann es einer Bestätigung mittels der Tastatur 22 bedürfen. Die installierte Software 60' ermöglicht einen Datenaustausch 11 des Handcomputers 30 mit dem Internet 10 über das Datenübertragungselement 21 der Datenverarbeitungseinheit 20. Erfindungsgemäß partizipiert der Handcomputer von der Leistungsfähigkeit des Datenübertragungselementes 21. Da das Schnittstellenpaar 25a,b,c/35a,b,c über eine hohe Datenübertragungsrate verfügt, kann der Handcomputer 30 mit der gleichen Datenrate auf das Internet 10 zugreifen wie die Datenverarbeitungseinheit 20.

Nach der Installation 110 der Software 60' auf der Datenverarbeitungseinheit 20 findet eine bestätigende Kommunikation 40 mit dem Handcomputer 30 statt. Diese Kommunikation 40 veranlasst den Handcomputer 30 die Schnittstellenkennung eines Modems 115 anzunehmen und die neue Schnittstellenkennung an die Datenverarbeitungseinheit 20 bzw. die Schnittstelle 25a,b,c zu übermitteln. Damit sind sowohl die Hardware- als auch die Softwaretechnischen Vorraussetzungen für einen Verbindungsaufbau des Handcomputers 30 mit dem Internet 10 sichergestellt. Möchte nun ein Benutzer auf das Internet 10 zugreifen, so kann er dieses am Handcomputer 30 auslösen 120, wozu es einer Betätigung einer Taste der Eingabeeinheit 38a bedarf. So ist es vorstellbar, dass entweder eine Tastenkombination oder eine speziell dafür ausgelegte Taste betätigt werden muss. Optional kann der Mobilfunknetzbetreiber auch einen USSD Dienst (Unstructured Supplementary Services) für die Verbindung zum Internet 10 anbieten. In diesem Falle würde die, eine Verbindung zum Internet 10 initiierende Nachricht aus einer Kombination von Stern, Raute und/oder Ziffernkombinationen bestehen. Darüber hinaus kann in der Software 60,60' des Handcomputers 30 ein Programmpaket integriert sein, welches über die Menüsteuerung des Handcomputers 30 gestartet werden kann.

Nach dem Betätigen der Eingabeeinheit 38a startet die Software 60,60', welches im Schritt 121 der Fig. 2 verdeutlicht ist. Gemäß Schritt 122 baut die Software 60,60' mittels des Datenübertragungselementes 21 der Datenverarbeitungseinheit 20 eine Verbindung zum Internet 10 auf. Anschließend werden die von dem Datenübertragungselement 21 aus dem Internet 10 geladenen Informationen nicht der Datenverarbeitungseinheit 20 zur Verfügung gestellt, sondern über die Schnittstelle 25a,b,c bzw. 35a,b,c direkt an den Handcomputer 30 übertragen. Dieser Schritt ist in Fig. 2 mit dem Bezugszeichen 130 versehen. Das erfindungsgemäße Verfahren bzw. die Software 60,60' ermöglicht dem Handcomputer 30 eine quasi direkte Kommunikation mit dem Internet 10. Anders als bei der direkten Kommunikation über die Kommunikationseinheit 31 kann der Handcomputer 30 die Datenübertragungsraten des Datenübertragungselementes 21 ausnutzen. Somit ist ein komfortables Surfen im Internet 10 mit dem Handcomputer 30 möglich. Ferner können auch umfangreiche Internetseiten oder Dokumente geladen werden, ohne dass dieses einen langen und kostspieligen Zeitraum in Anspruch nimmt.

Um den Inhaber der Datenverarbeitungseinheit 20 nicht mit den Kosten für die Kommunikation mit dem Internet 10 zu belasten, kann beim Verbindungsaufbau 122 aus einer Steuereinheit 36 des Handcomputers 30 eine Nutzeridentifikation an das Internet 10 übersandt werden. Dieses ermöglicht es dem Anbieter des Internetzuganges den Inhaber des Handcomputers 30 eindeutig zu authentifizieren und eventuell anfallende Kosten in Rechnung zu stellen. Die Nutzeridentifikation kann einerseits aus den auf der SIM-Karte gespeicherten Daten oder andererseits aus Informationen, die der Benutzer mittels der Eingabeeinheit 38a in den Handcomputer 30 eingeben muss, bestehen. Optional kann die Software 60 des Handcomputers 30 das übertragene Datenvolumen sowie die Verbindungszeit speichern. Dieses ermöglicht es dem Benutzer des Handcomputers 30 trotz Anwendung des erfindungsgemäßen Verfahrens auf mehreren Datenverarbeitungseinheiten 20 den Überblick über die entstandenen Kosten zu behalten.

Viele heute im Internet 10 angebotene Dienstleistungen - wie z.B. E-Mail, Ebay, Amazon - bedürfen individualisierter Zugangsdaten. Damit der Benutzer des Handcomputers 30 diese nicht jeweils neu eingeben muss, kann der Handcomputer 30 eine Speichereinheit 37 aufweisen, in der mindestens ein Zugangsdatensatz gespeichert ist. Greift der Benutzer des Handcomputers 30 auf eine Internetseite zu, die eines Zugangsdatensatzes bedarf, so kann die Übersendung dieses Zugangsdatensatzes durch eine Betätigung einer Taste der Eingabeeinheit 38a ausgelöst werden. Aus Gründen der Sicherheit hat es sich als vorteilhaft erwiesen, wenn die Übermittlung verschlüsselt stattfindet, weshalb der Handcomputer 30 über entsprechende Verschlüsselungsalgorithmen verfügen sollte.

### Bezugszeichenliste

- 10: Internet
- 11: Datenaustausch

- 20: Datenverarbeitungseinheit
- 21: Datenübertragungselement
- 22: Tastatur
- 23: Display
- 25a,b,c: erste Schnittstelle

- 30: Handcomputer
- 31: Kommunikationseinheit
- 35a,b,c: zweite Schnittstelle
- 36: Steuereinheit
- 37: Speichereinheit
- 38a: Eingabeeinheit
- 38b: Ausgabeeinheit

- 40: Kommunikation zwischen 20 und 30

- 50: System

- 60,60': Software

- 100: Kontakt der Schnittstellen
- 101: Verbindung
- 102: Schnittstellenkennung eines Wechseldatenträgers
- 105: Softwareabfrage
- 106,106': Antwort auf Abfrage 105

- 110: Installation der Software
- 115: Wechsel Schnittstellenkennung

- 120: Einwahl
- 121: Start des Datenübertragungselementes
- 122: Verbindungsaufbau

- 130: Kommunikation mit dem Internet

## Patentansprüche

1. Verfahren zur Kommunikation mit dem Internet (10),
mit einer Datenverarbeitungseinheit (20), die über ein Datenübertragungselement (21) und eine erste Schnittstelle (25a, 25b, 25c) verfügt,
wobei das Datenübertragungselement (21) einen Datenaustausch (11) zwischen dem Internet (10) und der Datenverarbeitungseinheit (20) ermöglicht,
mit einem separaten Handcomputer (30), insbesondere einem Mobiltelefon, der eine Kommunikationseinheit (31) und eine zweite Schnittstelle (35a, 35b, 35c) aufweist,
sowie einer, in dem Handcomputer (30) integrierten Software (60,60'),
wobei die Kommunikationseinheit (31) einen Austausch von Informationen mit einem Mobilfunknetz ermöglicht,
und nach Kommunikation (40) der ersten (25a, 25b, 25c) und der zweiten Schnittstelle (35a, 35b, 35c) die Software (60,60') eine Verbindung des Handcomputers (30) mit dem Internet (10) über das Datenübertragungselement (21) der Datenverarbeitungseinheit (20) ermöglicht.

2. Verfahren nach Anspruch 1,
**dadurch gekennzeichnet,**
**dass** im Moment einer Kommunikation (40) zwischen Handcomputer (30) und Datenverarbeitungseinheit (20)
(1) der Handcomputer (30) eine Schnittstellenkennung eines Wechseldatenträgers (102) an die Datenverarbeitungseinheit (20) übermittelt,
(2) die Software (60,60') vom Handcomputer (30) auf der Datenverarbeitungseinheit (20) installiert wird,
(3) der Handcomputer (30) eine Schnittstellenkennung eines Modems (105) an die Datenverarbeitungseinheit (20) übermittelt, und
(4) **dass** die Verbindung zwischen dem Handcomputer (30) und dem Internet (10) mittels der auf der Datenverarbeitungseinheit (20) installierten Software (60,60') hergestellt wird.

3. Verfahren nach Anspruch 2,
**dadurch gekennzeichnet**,
der Schritt (2) erst nach einer Bestätigung auf der Datenverarbeitungseinheit (20) ausgeführt wird.

4. Verfahren nach Anspruch 2 oder 3,
**dadurch gekennzeichnet**,
der Schritt (4) erst nach einer Bestätigung auf dem Handcomputer (30) und/oder auf der Datenverarbeitungseinheit (20) ausgeführt wird.

5. Verfahren nach einem der Ansprüche 2 bis 4,
**dadurch gekennzeichnet,**
**dass** vor Schritt (2)
(1a) der Handcomputer (30) prüft, ob die Software (60,60') auf der Datenverarbeitungseinheit (20) installiert ist,
(1 b) falls die Software (60,60') nicht installiert ist, das Verfahren mit Schritt (2) fortgeführt wird,
(1c) falls die Software (60,60') installiert ist, das Verfahren mit Schritt (3) fortgeführt wird.

6. Verfahren nach einem der vorhergehenden Ansprüche,
**dadurch gekennzeichnet,**
**dass** die erste und zweite Schnittstelle über eine Leitung (25c, 35c) oder schnurlos (25a, 25b, 35a, 35b), insbesondere mittels elektromagnetischer Wellen durch den Raum kommunizieren.

7. Verfahren nach einem der vorhergehenden Ansprüche,
**dadurch gekennzeichnet,**
**dass** die Schnittstellen (25a, 35a) Teil eines USB Bussystem sind, und dass der Handcomputer (30) einer USB Geräteklasse angehört, die sich durch einen generischen Treiber der Datenverarbeitungseinheit steuern lassen.

8. Verfahren nach einem der vorhergehenden Ansprüche,
**dadurch gekennzeichnet,**
**dass** der Handcomputer (30) eine Speichereinheit (37) umfasst, in der mindestens ein Zugangsdatensatz gespeichert ist, insbesondere, dass der Zugangsdatensatz während der Kommunikation mit dem Internet (10), vorzugsweise verschlüsselt übermittelt wird.

9. Verfahren nach Anspruch 8,
**dadurch gekennzeichnet,**
**dass** dem Zugangsdatensatz eine URL-Adresse zugeordnet ist, wobei insbesondere beim Aufrufen der URL-Adresse der Zugangsdatensatz aus der Speichereinheit (37) gelesen und über die Datenverarbeitungseinheit (20) in das Internet (10) übertragen wird.

10. Verfahren nach einem der vorhergehenden Ansprüche,
**dadurch gekennzeichnet,**
**dass** die Kommunikation mit dem Internet (10) durch Betätigung einer am Handcomputer (30) angeordneten Eingabeeinheit (38a) erfolgt.

11. Verfahren nach einem der vorhergehenden Ansprüche,
**dadurch gekennzeichnet,**
**dass** der Handcomputer (30) über die Datenverarbeitungseinheit (20) in einem LAN eingebunden ist, insbesondere, dass der Handcomputer (30) in dem LAN mit weiteren Datenverarbeitungseinheiten (20) kommuniziert.

12. Verfahren nach einem der vorhergehenden Ansprüche,
**dadurch gekennzeichnet,**
**dass** über eine Steuereinheit (36) des Handcomputers (30) eine Nutzeridentifikation erfolgt, wobei insbesondere ein Identifizierungssignal an die Datenverarbeitungseinheit (20) und/oder an das Internet (10) übermittelt wird.

13. System (50) zur Kommunikation mit dem Internet (10), mit einer Datenverarbeitungseinheit (20), die getrennt von einem Handcomputer (30) ausgebildet ist, wobei das System (50) nach einem Verfahren gemäß der Ansprüche 1 bis 12 betreibbar ist.

14. Computerprogramm-Produkt zur Ausführung des Verfahrens nach einem oder mehreren der vorhergehenden Ansprüche, **dadurch gekennzeichnet, dass** die Verfahrensschritte in einem in dem Computerprogramm-Produkt gespeicherten Programm integriert sind.
